# EUROPEAN PATENT APPLICATION

(11) **EP 4 708 068 A1**
(43) Date of publication of application: **11.03.2026**
(21) Application number: 25185973.2
(22) Date of filing: 27.06.2025
(51) Int. Cl.: G06F 16/242, G06Q 30/0601

(54) **PRODUCT SEARCH METHOD AND ELECTRONIC DEVICE**

(30) Priority: 04.09.2024 CN 202411241348
(71) Applicant: Hangzhou Alibaba International Internet Industry Co., Ltd., Hangzhou City, Zhejiang Province (CN)
(72) Inventor: LIU, Sen, Hangzhou City (CN); JIN, Linbo, Hangzhou City (CN); JIANG, Wen, Hangzhou City (CN); ZHANG, Guannan, Hangzhou City (CN); LIU, Jiayi, Hangzhou City (CN)
(74) Representative: Wu, Ting

(57) **Abstract**

A product search method includes: providing a product search interaction interface including a first area and a second area, the first area being configured to provide an Artificial Intelligence (AI) interaction component for: receiving a user's search request expressed through inputting a natural language statement; conducting multi-round interactions with a large AI model, including receiving refined expression statements of the user's search request inspired by the large AI model's responses to clarify the user's search request, and the second area for: providing attribute options for clarifying the search request based on interactions in the first area and corresponding attribute value options under each attribute option; and receiving user's search request information expressed by selecting one or more attributes and attribute values. The input statements collected from the first area and the attribute and attribute value selection results from the second area are fused to provide the product search result.

## Description

### CROSS-REFERENCE TO RELATED APPLICATIONS

This application claims priority to Chinese Patent Application No. 202411241348.X, filed with the China National Intellectual Property Administration on September 4, 2024, and entitled "Product Search Method and Electronic Device".

### TECHNICAL FIELD

This application relates to the technical field of product information search, particularly to a product search method and electronic device.

### BACKGROUND

In product information service systems (also referred to as e-commerce platforms), product search serves as a critical avenue for users to obtain product information. Users can initiate a product search by entering keywords, and the system returns a list of products matching the keywords. Users can then select products of interest from the list, among other actions.

In traditional methods, buyers are limited to expressing their search queries using brief keywords in a search box, which may lead to inefficient matching or failure to meet refined and precise search request. Furthermore, when users evaluate search results and formulate follow-up optimized search queries, they may face the cognitive burden of constructing appropriate expressions.

### SUMMARY

This application provides a product search method and an electronic device capable of assisting users in articulating their search request, thereby enhancing search efficiency.

The application provides the following solutions:
a product search method, including:
providing a product search interaction interface that includes a first area and a second area, the first area being configured to provide an Artificial Intelligence (AI) interaction component for receiving a user's search request expressed through inputting a natural language statement; conducting multi-round interactions with a large AI model, including receiving refined expression statements of the user's search request, inspired by the large AI model's responses to clarify the user's search request; the second area for providing a plurality of attribute options for clarifying the search request based on interactions in the first area, and a plurality of corresponding attribute value options under each attribute option and receiving user's search request information expressed by selecting one or more attributes and corresponding attribute values;
providing a product search result based on information collected from the first area and the second area, wherein the product search result is generated by fusing input statements including the natural language statement and refined expression statements collected from the first area and the attribute and attribute value selection results collected from the second area.

The method further includes:
rewriting the attribute and attribute value selection results collected from the second area, into a natural language statement, and displaying a the natural language statement in a dialogue area of the first area.

The fusing input statements includes:
rewriting the input statements into a structured search query statement suitable for a search engine; fusing the structured search statement with the attribute and attribute value selection results collected from the second area; and generating a complete structured search query statement to produce the product search result accordingly.

When generating the complete structured search query statement, the method utilizes a large AI model to perform natural language understanding on the input statements and the attribute and attribute value selection results, and according to the understanding of the user's search request, to rewrite the input statements and generate the complete structured search request statement.

The method further includes:
analyzing a match between the product search result and the understanding of the user's search request using a large AI model, and updating response content in the first area and/or the attribute options and attribute value options displayed in the second area based on an analyzing result.

The user includes a merchant-type buyer user, wherein the merchant-type buyer user is a buyer conducting, through a product information service system, bulk procurement or customization of products for resale or production purposes.

The search request includes bundled procurement of a plurality of different Stock Keeping Units (SKUs) of the same product, wherein the SKUs are represented by combinations of attribute values across a plurality of dimensions.

During a process of collecting search request, the method supports multi-selection of a plurality of different attribute values under the same attribute.

When generating the complete structured search query statement, a logical "OR" relationship is established among the plurality of attribute values selected under the same attribute, such that, when providing the product search result, a product meeting the user's procurement requirement in terms of relevant SKU is filtered from a product database based on the logical "OR" relationship and prioritized for display in the product search result.

A method for product search, comprising:
receiving a product search request submitted by a client, wherein the product search request is generated after the client collects a user's expression of search request through a product search interaction interface, the interface including: a first area configured to provide an AI interaction component for receiving the user's search request expressed through inputting a natural language statement; conducting multi-round interactions with a large AI model; and receiving refined expression statements of the user's search request inspired by the large AI model's responses to clarify the user's search request; and a second area for: providing a plurality of attribute options for clarifying the search request based on the interactions in the first area, providing a plurality of attribute value options under each attribute option, and receiving the user's search request expressed through a selection of relevant attributes and attribute values;
fusing input statements collected from the first area with the attribute and attribute value selection results collected from the second area;
generating a product search result based on fused input statement; and returning the product search result to the client for display.

A computer-readable storage medium storing a computer program, wherein the program, when executed by a processor, implements the steps of any of the aforementioned methods.

An electronic device, comprising:
one or more processors; and
a memory associated with the one or more processors, the memory being configured to store program instructions, wherein the program instructions, when read and executed by the one or more processors, implement the steps of any of the aforementioned methods.

A computer program product comprising a computer program or computer-executable instructions, wherein the computer program or computer-executable instructions, when executed by a processor in an electronic device, implement the steps of any of the aforementioned methods.

According to specific embodiments provided in this application, the following technical effects are disclosed:

in the embodiments of this application, by providing a first area (LUI, natural language user interaction interface) and a second area (GUI, graphical user interface) within the search interaction interface, users can input natural language statements via the LUI and select attributes and attribute values via the GUI during the search process. This approach leverages the flexibility of the LUI, allowing users to express their search request with fine granularity and clarity through multi-round dialogues, including refining and clarifying their search request. Simultaneously, the GUI offers visualized search request options, providing candidates for user needs and enabling users to quickly and efficiently adjust and refine search conditions. This design enhances user experience, reduces the likelihood of input errors, and improves matching efficiency. Furthermore, the information collected from both the LUI and GUI can be fused to generate the product search results.

Certainly, implementing any product described in this application does not necessarily require achieving all the advantages mentioned above simultaneously.

### BRIEF DESCRIPTION OF THE DRAWINGS

To more clearly illustrate the technical solutions in the embodiments of this application or in the prior art, the drawings required for the embodiments are briefly introduced below. It is evident that the drawings described below represent only some embodiments of this application. For those skilled in the art, additional drawings may be derived based on these without requiring inventive efforts.
FIG. 1 is a schematic diagram of the system architecture provided by the embodiments of this application.
FIG. 2 is a flowchart of the client-side method provided by the embodiments of this application.
FIG. 3 is a schematic diagram of the interface provided by the embodiments of this application.
FIG. 4 is another schematic diagram of the interface provided by the embodiments of this application.
FIG. 5 is a flowchart of the server-side method provided by the embodiments of this application.
FIG. 6 is a schematic diagram of the electronic device provided by the embodiments of this application.

### DETAIL DESCRIPTION OF THE EMBODIMENTS

The technical solutions in the embodiments of this application are described clearly and comprehensively with the accompanying drawings. It is evident that the described embodiments represent only a portion of the application and not all of them. Based on the embodiments in this application, all other embodiments obtained by those skilled in the art without creative efforts fall within the scope of protection of this application.

To facilitate understanding of the solutions provided in the embodiments of this application, it is first necessary to explain that existing product search systems also include some approaches to help users express their search request more precisely or in greater detail. For example, in one approach, when a user initiates a search by entering a keyword, they often need to narrow the search scope afterward. For instance, a user may input "dress" to start a search but, due to the large number of products under the "dress" category, may need to refine the search scope further, such as modifying the keyword to "French court-style dress." To address this, some systems offer "filter" or "refinement" functions, which allow users to filter by categories or other criteria. For example, after inputting "dress" to initiate a search, the system may provide filters based on categories, offering various options such as "French court-style dress" for selection, thereby eliminating the need for the user to re-enter keywords. However, the use of such filters may involve hierarchical category selection and other operations, which can pose challenges in terms of usability, leading to relatively low adoption rates.

With the advent of Artificial Intelligence (AI) models, particularly large-scale parameter AI models (commonly referred to as large AI models), new approaches to product search have emerged and been applied across various scenarios. In fact, some systems have already explored this direction. In these systems, users can express their search request by inputting long natural language sentences instead of relying on brief keywords. For example, a user might input, "I want to buy a smartwatch." Subsequently, an AI assistant can help narrow the search scope by presenting various options for the user to choose from, such as: whether the watch is for men, women, or children, the approximate price range, whether fitness tracking is needed, or whether advanced smart features are required. Users can make selections for each of these options, and the system then provides the product search results.

Compared with providing filters through sidebars or similar means, the aforementioned approach is more conducive to obtaining accurate product search results and is also more user-friendly. However, during the implementation of this application, the inventors have identified at least the following issues with the approach: it is primarily designed for shopping scenarios targeting C-type buyers. C-type buyers refer to individual consumers or end users. When C-type buyers purchase products, the primary purpose is personal consumption. Consequently, the required decision-making factors are typically fewer, and each specific decision-making factor usually involves a single, definitive parameter value. In most cases, a single round of dialogue is sufficient to clarify the user's specific search request and provide search results. As a result, existing AI-based search systems typically support only single-round dialogues.

However, in practical applications, more complex scenarios may arise. For instance, some users may not be able to specifically articulate the desired product category before initiating a search and can only express their needs in relatively abstract terms. For example, a user might indicate a need to attend a certain occasion, without providing information about the required product category, let alone specific attribute values for any attributes. In such cases, a direct search cannot be initiated, and a single round of dialogue is often insufficient to accurately express their specific search request. Additionally, some systems cater to B-type buyers, who typically need to purchase products in bulk or customize them for resale or production purposes. For these buyers, the search request are often more complex, making it even harder to fully and accurately express their needs through simple single-round dialogues. Consequently, providing accurate product search results becomes more challenging in such scenarios.

To address the above scenarios, the inventors of this application have found that replacing the existing single-round dialogue approach with a multi-round dialogue approach can guide users in expressing their search request more comprehensively and accurately. Through multi-round dialogues, users can be gradually inspired to articulate more precise search request. However, during multi-round interactions with an AI assistant, users are required to perform a plurality of input operations, such as voice or keyboard input, which may lead to increased complexity and lower interaction efficiency. This issue is particularly significant in B-type buyer scenarios, where search request is more complex. For example, in procurement or restocking scenarios, B-type buyers may need to procure various specifications, colors, and other variants of the same product. In such cases, if only a multi-round AI interaction is provided, users may still need to spend a considerable amount of time expressing their search request before receiving accurate product search results.

To address these challenges, this application provides an implementation scheme based on the combined interaction of an LUI (Language User Interface) and a GUI (Graphical User Interface). In this scheme, the LUI serves as an interface for multi-round interactions with an AI assistant, while the GUI component is also provided during the AI interaction process. The GUI offers users a plurality of relevant attributes and selectable attribute values, enabling them to express their search request through selection operations. The LUI and GUI can coexist on the same interface, allowing users to interact with the AI assistant in the LUI area via voice or keyboard input to gradually refine and clarify their search request. Simultaneously, users can express their search request in the GUI area by selecting attributes and attribute values. On the system side, the information entered and selections made by the user in both areas are fused, and the product search results are generated. During the process of generating product search results, a large AI model can infer the user's search request from the fused input statements and rewrite it into a structured query statement that can be processed by a search engine system. The search engine system then provides the product search results. This approach enables users to gradually and accurately express their search request with the assistance of the AI assistant. It also offers a hybrid interaction mode, combining voice or keyboard input with attribute selection, allowing users to express their needs through a plurality of channels. Consequently, this method improves search efficiency, particularly for B-type buyers with complex search request. In such scenarios, the advantages of this approach in enhancing efficiency are even more pronounced.

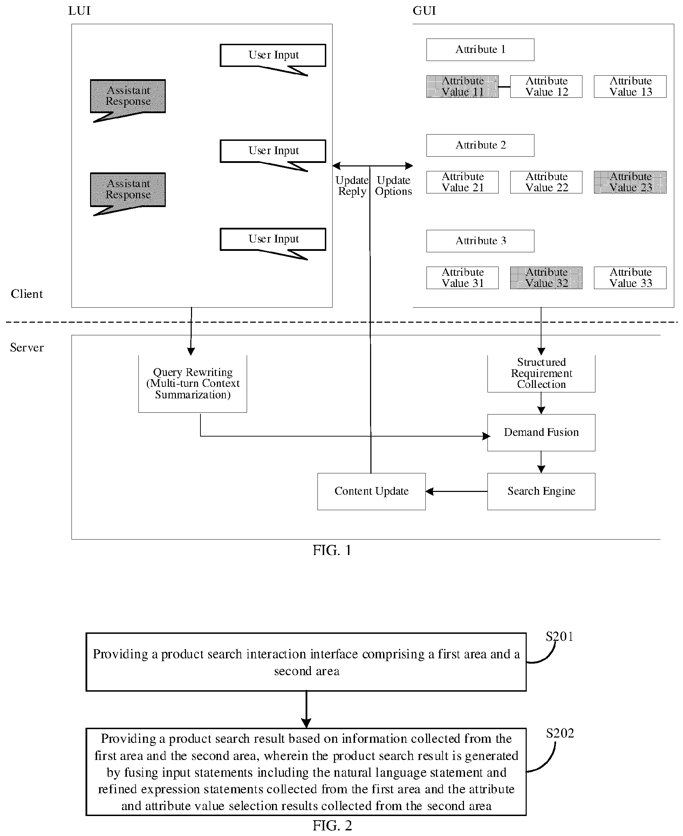

From a system architecture perspective, this application provides a product search interaction method combining LUI (Language User Interface) and GUI (Graphical User Interface). This approach can be implemented within a product information service system. Referring to FIG. 1, the system includes a client and a server. The client can exist in various forms, such as a web page, H5 page, or mobile app, to present the interface. This includes displaying the LUI and GUI and facilitating interaction with the user. The LUI component provides an input box and displays the user's input content and the AI assistant's responses during the dialogue. The GUI component presents a plurality of attribute options, with each attribute option containing a plurality of attribute value options. These attributes and attribute values are related to the dialogue content of the LUI component. The server provides specific data support, including invoking a large AI model and delivering related product search results. Specifically, the server can invoke a large AI model to summarize the multi-round contextual content collected by the LUI component and rewrite it into a structured format. The natural language statement can be fused with the structured requests information collected from the GUI. The server can generate structured query statements suitable for a search engine, submit them to the search engine, and retrieve the product search results. Optionally, the server can update content based on the product search results and the understanding of user requests. This includes updating the AI assistant's responses in the LUI component and the attribute and attribute value options displayed in the GUI. It is worth noting that if the terminal device's hardware resources are sufficient to support the necessary computing power, the client side can also handle tasks such as information fusion and invoking the large AI model.

The following provides a detailed introduction to the specific implementation schemes of the embodiments of this application.

### Embodiment 1

Firstly, embodiment 1 of this application provides a product search method from the perspective of the client. Referring to FIG. 2, the method may include the following steps:
**S201:** providing a product search interaction interface that includes a first area and a second area. The first area is configured to provide an Artificial Intelligence (AI) interaction component to receive the user's search request expressed through inputting a natural language statement. It facilitates multi-round interactions with a large AI model, allowing the user to input refined statements inspired by the AI model's responses to clarify their search request. The second area is designed to, based on the interactions in the first area, providing a plurality of attribute options for clarifying the search request. Each attribute option is accompanied by a plurality of corresponding attribute value options, allowing the user to express their search request by selecting the relevant attributes and attribute values.

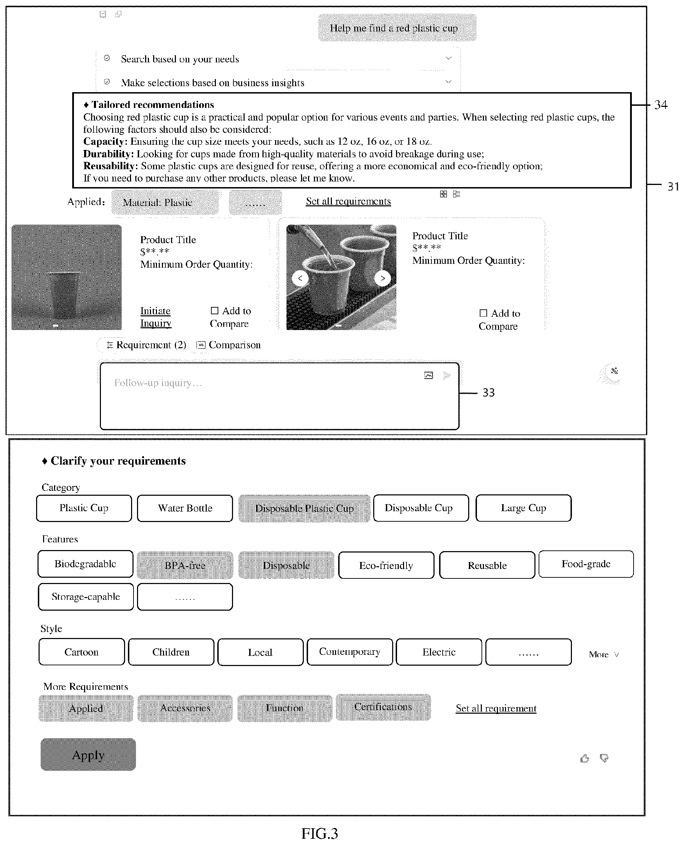

In the embodiments of this application, a product search interaction interface can be provided to users. Refer to FIG. 3, where the interface may include a first area 31 and a second area 32. In the initial display state of the interaction interface, the user can first input natural language statements via the input control 33 in the first area, which may include voice or keyboard input. The natural language statement from the user can be long sentences, more suitable for a conversational context. These are not limited to brief keywords or phrases but may include complex sentences with a plurality of components. For example, "Help me find a red plastic cup." In practical applications, the user's initial input may be vague or abstract, such as "I need to attend a banquet, but I don't know what to wear." Subsequently, the input is processed by a large AI model to understand the user's sentence and guide them to provide additional information to make their search request clearer. For instance, the AI model's response may resemble the content shown in location 34 of FIG. 3, which could be: "Is the banquet formal or casual?" "Do you have a preferred color or style for the outfit?" This interaction process helps refine the user's search request for more precise results:
"choosing red plastic cups is a practical and popular option for various events and parties. When selecting red plastic cups, consider the following aspects:
capacity: ensuring the cup size meets your needs, such as 12 oz, 16 oz, or 18 oz;
durability: looking for cups made from high-quality materials to avoid breakage during use;
reusability: some plastic cups are designed for reuse, offering a more economical and eco-friendly option;
if you need to purchase any other products, please let me know."

While the large AI model provides the above response, the second area 32 can simultaneously display a variety of selectable attributes and a plurality of attribute values under each attribute. The specific attributes and attribute values displayed in the second area 32 are determined based on the interactions in the first area 31. These options are designed to help the user refine and clarify their search request. For example, in the case of the earlier input, "Help me find a red plastic cup," the attributes and attribute values displayed in the second area can be related to "red plastic cup." These may include attributes such as Category, Features, and Style, with the following options: category may include plastic cup, water bottle, disposable plastic cup, disposable cup, large cup, etc.; features may include biodegradable, BPA-free, disposable, eco-friendly, food-grade, reusable, storage-capable, etc.; styles may include cartoon, children's, contemporary, local, eclectic, etc. These options allow the user to refine their search request further, ensuring that the results are more accurate and aligned with their needs.

In this way, during the next round of interaction, the user can follow the AI assistant's guidance and continue to input more specific search request via the input control 33. Alternatively, since the attributes and attribute values displayed in the second area 32 are contextually related to the interaction process, the user can also select attribute values from the options displayed in the second area. Moreover, the user has the flexibility to both input natural language statements in the first area 31 and select attribute values in the second area 32. This multi-modal interaction allows the user to express their search request through various channels, enhancing convenience and efficiency.

After completing the input of natural language statements or selecting attributes and attribute values, the user can initiate a specific search by clicking options such as "Apply" to obtain new product search results. Subsequently, the user can continue interacting with the AI assistant, and the second area will update the displayed attributes and attribute value options accordingly. For attributes whose values have already been selected in previous rounds or interactions, they will no longer appear in the second area. This guides the user to explore and select attribute values from other available attributes, further refining their search request. After completing an input and/or selection operation, the user can initiate another search. This process continues until the user identifies a product in the product search results that meets their specific needs.

**S202:** providing a product search result based on information collected from the first area and the second area. The product search result is generated by fusing input statements including the natural language statement and refined expression statements collected from the first area and the attribute and attribute value selection results collected from the second area.

During each round of interaction, since the user may input natural language statements in the first area and select attribute values in the second area, the system fuses the input statements collected from the first area with the attribute and attribute value selection results collected from the second area. Based on this fused input statement, the product search results are provided.

Specifically, during the information fusion process, the second area provides attribute and attribute value options. When the user selects one or more attribute values, these selection results inherently carry structured information, such as in the form of <attribute, attribute value> key-value pairs. However, the input collected from the first area is expressed in natural language, which is unstructured. To facilitate the subsequent generation of product search results, the unstructured input statements collected from the first area can first be rewritten into structured search query statements suitable for search engines. For example, the system can extract keywords or other relevant information from the unstructured input statements and rewrite them into structured search query statements compatible with the search system. These structured query statements are then fused with the structured information collected from the second area to generate a complete structured search query statement. This complete structured search query statement is submitted to the search engine, which executes the specific search logic and provides the product search results.

It should be noted that in specific implementations, the user in this application's embodiment may be a merchant-type buyer, i.e., a B-type buyer. B-type buyers refer to users who perform, through a product information service system, bulk procurement or customization of products for resale or production purposes. The search request of B-type buyers differ from those of C-type buyers, whose shopping purposes are typically for personal use or gifting. C-type buyers generally purchase single items and need to select one attribute value for each dimension, which corresponds to a single SKU (Stock Keeping Unit). In contrast, B-type buyers often conduct bulk procurement and may need to restock a plurality of SKUs of the same product. For instance, for plastic cups, a B-type buyer may need not only red cups but also green, yellow, and other colors. Regarding capacity, they may require 500ml, 350ml, 600ml, and so on. To address this, this application supports the procurement requirements for a plurality of SKUs of the same product. During the process of collecting search request, it allows multi-selection of different attribute values under the same attribute. This multi-selection can be expressed in two ways: through inputting a natural language statement in the first area, where users can specify a plurality of attribute values for the same attribute in a single input statement; through direct multi-selection in the second area, where users can select a plurality of attribute values from the list provided. For instance, in scenarios where B-type buyers frequently require multi-SKU combinations, the GUI enables users to conveniently select a plurality of attribute values for a single attribute. Similarly, the LUI allows users to verbally specify a plurality of desired attribute values. This dual support ensures a streamlined and efficient way for B-type buyers to articulate and fulfill their multi-SKU procurement needs.

For the aforementioned multi-SKU bundling scenario, during the request fusion process, the logical relationships between a plurality of attribute values-OR (logical OR) and AND (logical AND)-can be accurately preserved based on semantic understanding and predefined rules, ensuring their effectiveness in the search engine. Specifically, when generating the complete structured search query statement, a plurality of selected attribute values under the same attribute can be set with a logical OR relationship. This ensures that when providing the product search results, the system filters products from the product database that meet the user's procurement needs in terms of the relevant SKUs, based on the logical OR relationship. These results are then prioritized for display in the product search results. By supporting the logical OR relationship in this way, the system ensures that matching occurs at the SPU (Standard Product Unit) level, rather than being restricted to an SKU-based perspective that requires fulfilling all attribute criteria. This approach enhances flexibility and accuracy, enabling users to identify products that meet broader, aggregated procurement needs while maintaining the granularity necessary for practical multi-SKU scenarios.

In the search engine, the inverted index of products can be optimized to ensure that keyword retrieval adheres to the AND and OR relationships structured by the request fusion module among a plurality of attribute values under each attribute. This optimization ensures that products are retrieved accurately based on attribute-specific logic. Additionally, the product relevance processing can be enhanced to prioritize displaying products that precisely match the user's category and attribute requirements. This ensures that the most relevant products are presented to the user first, improving the efficiency and accuracy of the product search results.

It should be noted that when users select attributes and attribute values through the second area, the AI model can rewrite these selection results into natural language statements and display them in the dialogue area of the first area. This serves to inform the user that the attribute and attribute value selections made in the second area have the same effect as inputting a natural language statement in the first area. Since natural language statements are easier for users to understand, rewriting the selection results into this form allows the outcomes of attribute and attribute value selections in the second area to be reflected in the dialogue area of the LUI in the format of multi-round conversations. This approach helps users intuitively determine whether the current product search results align with their search request, enhancing their understanding and interaction with the system.

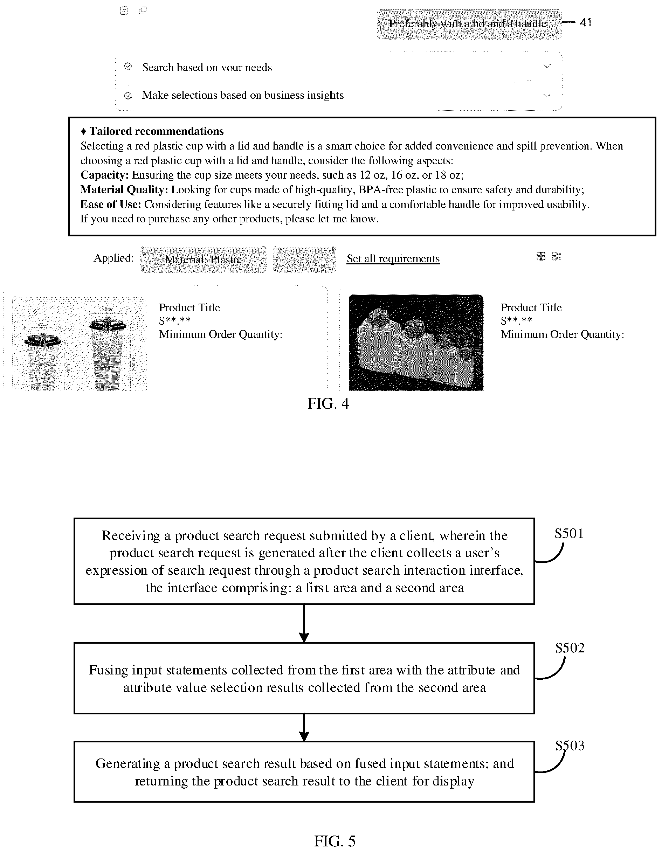

For example, in the scenario illustrated in FIG. 3, suppose the user initially inputs "Help me find a red plastic cup" in the first area. After a plurality of selectable attributes and attribute values are displayed in the second area, the user selects "with a lid" and "with a handle" as attribute values. Upon clicking "Apply," as shown in FIG. 4, the system can update the product search results and also display the dialogue content "Preferably with a lid and a handle" in the dialogue area (as indicated by 41 in FIG. 4, though the GUI component is not shown in FIG. 4). In this second-round interaction, the user's actual request might be "Preferably with a lid and a handle." However, instead of having to input this sentence via voice or keyboard, the user can simply click on the "with a lid" and "with a handle" attribute values in the second area. The AI then rewrites these selection results into the natural language statement "Preferably with a lid and a handle" and provides the product search results. This approach offers several advantages: efficiency: selecting attribute values is faster than manually inputting natural language statements; continuity: by rewriting the attribute selections into natural language statements, the system maintains the continuity of the dialogue in the first area; fusion: it seamlessly fuses the results of operations in both areas, enhancing the interaction experience; feedback: the natural language statement allows the user to verify whether the system has correctly understood their requests. If there is a misunderstanding, the user can make adjustments in the next round of interaction. This method not only improves efficiency but also ensures a coherent user experience, enabling accurate understanding and fulfillment of the user's needs.

Additionally, in practical applications, it is not always necessary to construct structured search query statements. Instead, the system can directly leverage a large AI model to match the fused input statement with product data in the database and generate product search results. In this approach, the large AI model can process multimodal information, including text, images, and videos, which may improve the accuracy of product search results. However, executing the matching process using a large AI model may require significant time, resulting in longer wait times for users to receive product search results. Alternatively, in practical applications, predictive measures can be implemented. For instance, potential user search request can be anticipated, and the AI model can perform offline matching between predicted search request and product information in advance. The matching results can be stored. Once the user's actual search request is collected and analyzed, the system can retrieve relevant results from the pre-stored data, thereby reducing response time. This hybrid approach balances accuracy and efficiency, ensuring that users receive high-quality product search results while minimizing wait times.

In summary, the embodiments of this application provide an input box in the first area (i.e., the LUI component) to facilitate multi-round interactions between the user and the AI assistant. When users engage in multi-round natural language interactions, the system can model the multi-round context through a query rewriting module to ensure that the user's current search request is comprehensive and complete, thereby capturing fine-grained search request. Additionally, the system can correct inaccuracies in user expressions, such as spelling errors or ambiguities, further enhancing the precision and usability of the search process.

Furthermore, the control panel in the second area (i.e., the GUI component) can provide a list of attributes and attribute values that are highly relevant to the current search request, allowing users to quickly express their needs by clicking on options. Once the user makes a selection, the system collects this information for search matching. After retrieving the product search results, the system updates and presents a new set of search request suggestions, enabling the user to make further selections and refine their search iteratively.

Finally, the request fusion module can rewrite the unstructured expressions collected through the LUI, then fuse them with the structured requests gathered via the GUI. This process normalizes the information expressed in natural language and combines it with the user's selections in the control panel, achieving a more comprehensive understanding of the user's needs and leading to better matching results. After fusing the requests from the LUI and GUI, the request fusion generates search query statements and filtering criteria, which are sent to the search engine to retrieve the results.

After retrieving the product search results, the system can comprehensively consider the results of request understanding and the search outcomes. Using a large AI model, it analyzes the degree to which the user's current needs are met, as well as potential search requestions. Based on this analysis, the system updates the content accordingly. This update includes providing natural language response and suggestions, as well as refreshing the candidate search request options in the control panel. These updates aim to inform the user about the matching status and further guide them in refining their search behavior for subsequent steps.

This embodiment of the application enhances the search process by fusing a first area (LUI, natural language user interaction interface) and a second area (GUI, graphical user interface) within the search interaction interface. This allows users to input natural language statements through the LUI while selecting attributes and attribute values via the GUI. The flexibility of the LUI enables users to express their search request with fine granularity, providing opportunities for clarification, refinement, and elaboration through multi-round dialogues. Simultaneously, the GUI offers visualized search options, presenting candidates for user requests and enabling quick and efficient adjustment and refinement of search criteria. This design improves the user experience by reducing input errors and enhancing matching efficiency. The system then fuses the information collected from the LUI and GUI, generating the product search results to effectively meet user needs.

Compared with traditional product search methods, the solution provided in this embodiment of the application offers at least the following advantages:
(1) overcoming expression limitations: traditional search boxes restrict input length, making it difficult to fully express fine-grained requests. In this solution, the LUI enables users to freely express their needs using unstructured text, while the GUI provides visualized options that allow users to quickly refine and adjust their requests. This combination significantly enhances matching efficiency.
(2) enhancing expression accuracy: user may struggle with unclear request due to a lack of professional terminology or typographical errors. This solution leverages multi-round interactions to analyze user input and reference historical information, while also incorporating structured options from the GUI. This ensures accurate request collection and reduces the risk of mismatched results.
(3) reducing user burden: traditional methods require users to actively plan their next search steps, increasing cognitive load. This solution combines LUI's multi-round dialogue with GUI's quick selection options, allowing users to progressively clarify their needs. This effectively streamlines the search process and alleviates the user's burden.
(4) request fusion: the request fusion module fuses information collected from the LUI and GUI, combining the structured data from the GUI with the unstructured input from the LUI. This comprehensive analysis ensures that the generated search query is thorough and accurate, encompassing both the user's current and historical requests.
(5) real-time optimization and response: in a preferred implementation, the system can perform real-time analysis and updates after executing a search. By evaluating the relationship between the "user request understanding results" and the "search matching results," the system automatically updates suggestions for the next search steps. This includes GUI-based search recommendations (attributes and attribute value options) and/or natural language response in the LUI (responses from the AI model). This response mechanism helps users quickly adjust their search strategies, effectively guiding subsequent actions, improving overall search efficiency, and continuously optimizing the user experience.

### Embodiment 2

This embodiment provides a product search method from the perspective of the server. Refer to FIG. 5, which illustrates the method comprising the following steps:
**S501:** receiving a product search request submitted by a client. The product search request is generated after the client collects a user's expression of search request through a product search interaction interface. The interface includes a first area and a second area, the first area is configured to provide an artificial intelligence (AI) interaction component for: receiving a user's search request expressed through inputting a natural language statement; conducting multi-round interactions with a large AI model, including receiving refined expression statements of the user's search request inspired by the large AI model's responses to clarify the user's search request; and the second area is for: providing a plurality of attribute options for clarifying the search request based on interactions in the first area and a plurality of corresponding attribute value options under each attribute option, and receiving user's search request information expressed by selecting one or more attributes and corresponding attribute values.
**S502:** fusing the input statements collected from the first area with the attribute and attribute value selection results collected from the second area;
**S503:** generating a product search result based on the fused input statement and returning the product search result to the client for display.

For details not explicitly described in Embodiment 2, please refer to the descriptions provided in Embodiment 1 and other parts of this specification, which will not be reiterated here.

It should be noted that the embodiments of this application may involve the use of user data. In practical applications, such use should comply with the applicable laws and regulations of the respective country (e.g., with explicit user consent, proper user notification, etc.). User-specific personal data may only be used in the solutions described herein within the limits permitted by applicable laws and regulations.

Corresponding to Embodiment 1, this application also provides a product search device, which may include:
interface provision unit, configured to provide a product search interaction interface that includes a first area and a second area. The first area provides an AI interaction component to receive the user's search request expressed through inputting a natural language statement. It supports multi-round interactions with a large AI model, collecting refined statements inspired by the AI model's responses to clarify the user's search request. The second area is designed to, based on the interactions in the first area, present a plurality of attribute options for clarifying the search request. Each attribute option includes corresponding attribute value options, enabling the user to express their search request by selecting relevant attributes and attribute values;
search results provision unit, configured to provide product search results based on the information collected from the first area and the second area. The product search results are generated by fusing the input statements including the natural language statement and refined expression statements collected from the first area and the attribute and attribute value selection results collected from the second area.

In specific implementations, the device may further include:
rewriting unit, configured to rewrite the attribute and attribute value selection results collected from the second area into natural language statements. The natural language statements are then displayed in the dialogue area of the first area.

During the process of information fusion, input statements collected from the first area can be rewritten into structured search query statements suitable for a search engine. These structured statements are then fused with the attribute and attribute value selection results collected from the second area to generate a complete structured search query statement. This structured query statement is used to produce the product search results accordingly.

When generating the complete structured search query statement, an AI model can be used to perform natural language understanding on the input statements and the attribute and attribute value selection results. Based on this understanding of the user's search request, the input statements are rewritten, and the complete structured search query statement is generated.

Additionally, the device may also include:
updating unit, configured to analyze the matching between the product search results and the user's search request understanding results using an AI model after obtaining the product search results. Based on the analysis, it updates the response content in the first area and/or the attribute options and attribute value options displayed in the second area.

The users include merchant-type buyer users, who are buyers that perform, through a product information service system, bulk procurement or customization of products for resale or production purposes.

The search request include the need for bundled procurement of a plurality of different Stock Keeping Units (SKUs) of the same product, where the SKUs are expressed as combinations of attribute values across a plurality of dimensions.

During the process of collecting search request, the system supports multi-selection of a plurality of different attribute values under the same attribute.

In a preferred implementation, when generating the complete structured search query statement, the selected a plurality of attribute values under the same attribute are set with a logical OR relationship. This ensures that, when providing the product search results, products meeting the user's procurement requirements in terms of the relevant SKUs are filtered from the product database based on the logical OR relationship. These products are then prioritized for display in the product search results.

Corresponding to Embodiment 2, this application also provides a product search device, which may include:
request receiving unit, configured to receive product search requests submitted by the client. The product search request is generated after the client collects the user's expression of search request through a product search interaction interface. The interface includes a first area and a second area. The first area provides an AI interaction component to receive the user's search request expressed through natural language statement. It supports multi-round interactions with a large AI model, collecting refined statements inspired by the AI model's responses to clarify the user's search request. The second area presents a plurality of attribute options for clarifying the search request, along with corresponding attribute value options under each attribute. This allows the user to express their search request by selecting relevant attributes and attribute values.
information fusion processing unit, configured to fuse the input statements collected from the first area with the attribute and attribute value selection results collected from the second area.
search result generation unit, configured to generate product search results based on the fused input statement and return the results to the client for display.

Additionally, this application provides a computer-readable storage medium storing a computer program. When executed by a processor, the program implements the steps of any of the methods described in the aforementioned embodiments.

Additionally, this application provides an electronic device, comprising:
one or more processors; and
a memory associated with the one or more processors, wherein the memory is configured to store program instructions. When the program instructions are read and executed by the one or more processors, they implement the steps of any of the methods described in the aforementioned embodiments.

A computer program product, comprising a computer program or computer-executable instructions, wherein the computer program or computer-executable instructions, when executed by a processor in an electronic device, implement the steps of the method described in the aforementioned method embodiments.

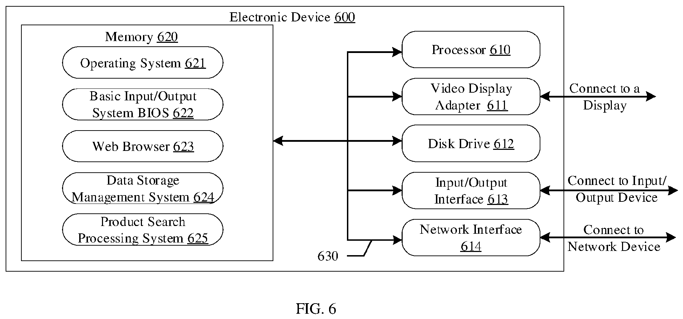

FIG. 6 exemplarily illustrates the architecture of the electronic device, which specifically includes: processor 610, video display adapter 611, disk drive 612, input/output interface 613, network interface 614, memory 620. These components-processor 610, video display adapter 611, disk drive 612, input/output interface 613, and network interface 614-are communicatively connected to the memory 620 via a communication bus 630.

The processor 610 can be implemented using a general-purpose CPU (Central Processing Unit), a microprocessor, an Application Specific Integrated Circuit (ASIC), or one or more fused circuits. It is used to execute relevant programs to implement the technical solutions provided by this application.

The memory 620 can be implemented in various forms, such as ROM (Read-Only Memory), RAM (Random Access Memory), static storage devices, or dynamic storage devices. The memory 620 may store an operating system 621, which controls the operation of the electronic device 600, and a Basic Input/Output System (BIOS), which manages low-level operations of the electronic device 600. The memory 620 may also store other applications such as a web browser 623, a data storage management system 624, and a product search processing system 625. The product search processing system 625 can specifically implement the operations described in the steps of the embodiments of this application. In summary, when the technical solutions provided by this application are implemented via software or firmware, the relevant program code is stored in the memory 620 and executed by the processor 610.

The input/output interface 613 is used to connect to input/output modules to facilitate information input and output. The input/output modules can be configured as components within the device (not shown in the figure) or externally connected to the device to provide corresponding functions. Input devices may include a keyboard, mouse, touchscreen, microphone, various sensors, etc. Output devices may include a display, speaker, vibrator, indicator lights, etc.

The network interface 614 is used to connect to a communication module (not shown in the figure) to enable communication and interaction between this device and other devices. The communication module can facilitate communication through wired methods, such as USB or Ethernet, and wireless methods, such as mobile networks, WiFi, or Bluetooth.

The bus 630 serves as a pathway for transmitting information between various components of the device, such as the processor 610, video display adapter 611, disk drive 612, input/output interface 613, network interface 614, and memory 620.

It should be noted that although the device described above only illustrates components such as the processor 610, video display adapter 611, disk drive 612, input/output interface 613, network interface 614, memory 620, and bus 630, in specific implementations, the device may also include additional components necessary for its normal operation. Furthermore, those skilled in the art will understand that the device may include only the components necessary to implement the solutions provided in this application and does not need to include all the components shown in the illustration.

From the description of the above embodiments, those skilled in the art can clearly understand that this application can be implemented using software combined with a necessary general hardware platform. Based on this understanding, the essence of this application or the parts contributing to the prior art can be embodied in the form of a software product. This computer software product can be stored in a storage medium, such as ROM/RAM, magnetic disks, optical disks, etc., and includes several instructions. These instructions enable a computer device (such as a personal computer, server, or network device) to execute the methods described in various embodiments or specific parts of the embodiments of this application.

The various embodiments in this specification are described in a progressive manner, with the similar or identical parts across embodiments referring to each other. Each embodiment focuses on its differences from the others. Particularly for system or system-based embodiments, as they are fundamentally similar to the method embodiments, their descriptions are simplified, and relevant details can be found in the descriptions of the method embodiments. The systems and system embodiments described above are illustrative only. The units described as separate components may or may not be physically separated, and the components shown as units may or may not be physical units. They may reside in one location or be distributed across a plurality of network units. Some or all of the modules can be selected based on actual needs to achieve the purposes of the embodiments. A person skilled in the art can understand and implement these embodiments without requiring inventive effort.

The product search method and electronic device provided in this application have been described in detail above. Specific examples have been used to explain the principles and implementation methods of this application. The descriptions of the above embodiments are provided solely to aid in understanding the methods and core concepts of this application. Meanwhile, those skilled in the art may make modifications to the specific implementation methods and application scope based on the ideas presented in this application. In summary, the content of this specification should not be interpreted as limiting the scope of this application.

## Claims

1. A product search method, comprising:
providing a product search interaction interface comprising a first area and a second area, wherein:
the first area is configured to provide an artificial intelligence (AI) interaction component for:
receiving a user's search request expressed through inputting a natural language statement;
conducting multi-round interactions with a large AI model, including receiving refined expression statements of the user's search request inspired by the large AI model's responses to clarify the user's search request; and
the second area is for:
providing a plurality of attribute options for clarifying the search request based on interactions in the first area and a plurality of corresponding attribute value options under each attribute option, and
receiving user's search request information expressed by selecting one or more attributes and corresponding attribute values;
providing a product search result based on information collected from the first area and the second area, wherein:
the product search result is generated by fusing input statements including the natural language statement and refined expression statements collected from the first area and the attribute and attribute value selection results collected from the second area.

2. The method of claim 1, further comprising:
rewriting the attribute and attribute value selection results collected from the second area into a natural language statement, and displaying the natural language statement in a dialogue area of the first area.

3. The method of claims 1 or 2, wherein the fusing input statements comprises:
rewriting the input statements into a structured search query statement suitable for a search engine; fusing the structured search query statement with the attribute and attribute value selection results collected from the second area; and generating a complete structured search query statement to produce the product search result accordingly.

4. The method of claim 3, wherein generating the complete structured search query statement comprises:
utilizing a large AI model to perform natural language understanding on the input statements and the attribute and attribute value selection results, and according to the understanding of the user's search request, to rewrite the input statements and generate the complete structured search request statement.

5. The method of claim 4, further comprising:
analyzing, using a large AI model, a match between the product search result and the understanding of the user's search request; and updating response content in the first area and/or the attribute options and attribute value options displayed in the second area based on an analyzing result.

6. The method according to any one of claims 1 to 5, wherein:
the user includes a merchant-type buyer user, wherein the merchant-type buyer user is a buyer conducting, through a product information service system, bulk procurement or customization of products for resale or production purposes;
the search request includes bundled procurement of a plurality of different Stock Keeping Units (SKUs) of the same product, wherein the SKUs are represented by combinations of attribute values across a plurality of dimensions; and
multi-selection of a plurality of different attribute values under the same attribute is supported.

7. The method of claim 6, wherein:
when generating the complete structured search query statement, a logical OR relationship is established among the plurality of attribute values selected under the same attribute, such that, when providing the product search result, a product meeting the user's procurement requirement in terms of relevant SKUs is filtered from a product database based on the logical OR relationship.

8. A non-transitory computer-readable storage medium configured with instructions executable by one or more processors to cause the one or more processors to perform the method of claim 1.

9. An electronic device comprising:
one or more processors; and
one or more computer-readable memories coupled to the one or more processors and having instructions stored thereon that are executable by the one or more processors to perform the method of claim 1.

10. A product search method, comprising:
receiving a product search request submitted by a client, wherein the product search request is generated after the client collects a user's expression of search request through a product search interaction interface, the interface comprising:
a first area configured to provide an AI interaction component for: receiving the user's search request expressed through inputting a natural language statement; conducting multi-round interactions with a large AI model including receiving refined expression statements of the user's search request inspired by the large AI model's responses to clarify the user's search request; and
a second area configured for: providing a plurality of attribute options for clarifying the search request based on the interactions in the first area, providing a plurality of attribute value options under each attribute option, and receiving the user's search request expressed through a selection of relevant attributes and attribute values;
fusing input statements collected from the first area with the attribute and attribute value selection results collected from the second area;
generating a product search result based on the fused input statements; and returning the product search result to the client for display.

11. The method of claim 10, further comprising:
rewriting the attribute and attribute value selection results collected from the second area into a natural language statement, and displaying the natural language statement in a dialogue area of the first area.

12. The method of claims 10 or 11, wherein the fusing input statements comprises:
rewriting the input statements into a structured search query statement suitable for a search engine; fusing the structured search query statement with the attribute and attribute value selection results collected from the second area; and generating a complete structured search query statement to produce the product search result accordingly.

13. The method of claim 12, wherein generating the complete structured search query statement comprises:
utilizing a large AI model to perform natural language understanding on the input statements and the attribute and attribute value selection results to generate the complete structured search request statement;
optionally the method further comprising: analyzing, using a large AI model, a match between the product search result and the understanding of the user's search request; and updating response content in the first area and/or the attribute options and attribute value options displayed in the second area based on an analyzing result.

14. A non-transitory computer-readable storage medium configured with instructions executable by one or more processors to cause the one or more processors to perform the method according to any one of claims 10 to 13.

15. An electronic device comprising:
one or more processors; and
one or more computer-readable memories coupled to the one or more processors and having instructions stored thereon that are executable by the one or more processors to perform the method according to any one of claims 10 to 13.
